Europäisches Patentamt

European Patent Office

Office européen des brevets

(19)

(11) Numéro de publication: **0 192 560**
**B1**

(12)

# FASCICULE DE BREVET EUROPÉEN

(45) Date de publication du fascicule du brevet:
**17.01.90**

(51) Int. Cl.⁴: **B 60 R 22/06**

(21) Numéro de dépôt: **86400292.8**

(22) Date de dépôt: **11.02.86**

(54) **Rail de guidage utilisable notamment dans un dispositif de ceinture de sécurité passive pour véhicule automobile.**

(30) Priorité: **15.02.85 FR 8502235**

(43) Date de publication de la demande:
**27.08.86 Bulletin 86/35**

(45) Mention de la délivrance du brevet:
**17.01.90 Bulletin 90/03**

(84) Etats contractants désignés:
**DE GB IT SE**

(56) Documents cité:
**DE-A-2 915 053**
**DE-A-2 951 880**
**DE-A-3 026 774**
**GB-A-1 416 592**
**GB-A-2 028 631**
**US-A-4 241 939**
**US-A-4 296 944**
**US-A-4 359 236**

(73) Titulaire: **ECIA - EQUIPEMENTS ET COMPOSANTS POUR L'INDUSTRIE AUTOMOBILE**
**F-25400 Audincourt (Doubs) (FR)**

(72) Inventeur: **Monsigny, Jean**
**30 rue du Zornhoff**
**67700 Saverne (FR)**

(74) Mandataire: **Moncheny, Michel**
**c/o Cabinet Lavoix 2 Place d'Estienne d'Orves**
**F-75441 Paris Cedex 09 (FR)**

LIBERGRAF, STOCKHOLM 1990

## Description

La présente invention concerne les dispositifs de ceinture de sécurité passive et elle se rapporte plus particulièrement à un perfectionnement apporté à un rail de guidage utilisé dans ces dispositifs:

On connaît dans l'état de la technique des dispositifs de ceinture de sécurité passive. Ces dispositifs comprennent une sangle formant baudrier enroulée à une de ses extrémités par un enrouleur et portant à son extrémité libre une boucle qui coopère avec un pêne solidaire d'un organe coulissant se déplaçant dans un rail de guidage et de retenue solidaire du véhicule. Un exemple d'un tel dispositif est décrit dans le document US-A-4 241 939.

Le document US-A-4 296 944 selon la partie caractérisante de la revendication 1 décrit quant à lui un rail de guidage dans lequel peut se déplacer un organe coulissant solidaire d'un pêne faisant saillie à travers une fente ménagée dans ledit rail et coopérant avec une boucle de ceinture de sécurité passive, notamment pour véhicule automobile, ledit rail étant constitué, au moins dans sa partie de guidage de l'organe coulissant, de deux parties latérales de guidage en déplacement de l'organe coulissant, disposées de part et d'autre de ladite fente et d'une partie d'appui pour l'organe coulissant, disposée en regard de ladite fente, lesdites parties latérales de guidage étant constituées, en section, par des lobes à peu près semi-circulaires, disposés de part et d'autre de la fente.

En général, une partie du rail de guidage est disposée contre le montant vertical de la caisse de véhicule et une autre partie est appliquée contre le bord extérieur du pavillon au-dessus de l'embrasure de la porte.

Ce rail présente un coude dont le rayon de courbure est faible, au niveau du coin de la portière. Ceci pose des problèmes de coulissement de l'organe coulissant lorsqu'il se déplace dans la région du coude.

En effet, le rail de guidage doit assurer un guidage de l'organe coulissant, tout en possédant une rigidité suffisante pour supporter des efforts engendrés par le déplacement de la sangle et ceci pour un poids et un prix de revient minimum afin de répondre à des critères communs dans l'industrie automobile.

L'invention a pour but de résoudre ces problèmes.

A cet effet, l'invention a pour objet un rail de guidage dans lequel peut se déplacer un organe coulissant solidaire d'un pêne faisant saillie à travers une fente ménagée dans ledit rail et coopérant avec une boucle de ceinture de sécurité passive, notamment pour véhicule automobile, ledit rail étant constitué, au moins dans sa partie de guidage de l'organe coulissant, de deux parties latérales de guidage en déplacement de l'organe coulissant, disposées de part et d'autre de ladite fente et d'une partie d'appui pour l'organe coulissant, disposée en regard de ladite fente, lesdites parties latérales de guidage étant constituées, en section, par des lobes à peu près semi-circulaires, disposés de part et d'autre de la fente, caractérisé en ce que la partie d'appui pour l'organe coulissant est constituée, en section, par un lobe à peu près semi-circulaire, disposé en regard de la fente.

L'invention sera mieux comprise à l'aide de la description qui va suivre, donnée uniquement à titre d'exemple et faite en se référant aux dessins annexés, sur lesquels:

- la Fig. 1 est une vue schématique en perspective de l'habitacle d'un véhicule automobile équipé d'un dispositif de ceinture de sécurité passive;
- la Fig. 2 est une vue en coupe et en perspective d'un rail de guidage selon l'invention;
- la Fig. 3 est une vue de dessus d'un organe coulissant comportant un pêne, placé dans un rail de guidage selon l'invention;
- la Fig. 4 est une vue en coupe selon la ligne A - A de la Fig. 3 et dans laquelle on a représenté un pêne en position escamotée à l'intérieur du rail de guidage selon l'invention;
- la Fig. 5 est une vue en coupe suivant la ligne B - B de la Fig. 4; et
- la Fig 6 est une vue en coupe d'un organe coulissant, placé dans une position particulière du rail de guidage selon l'invention.

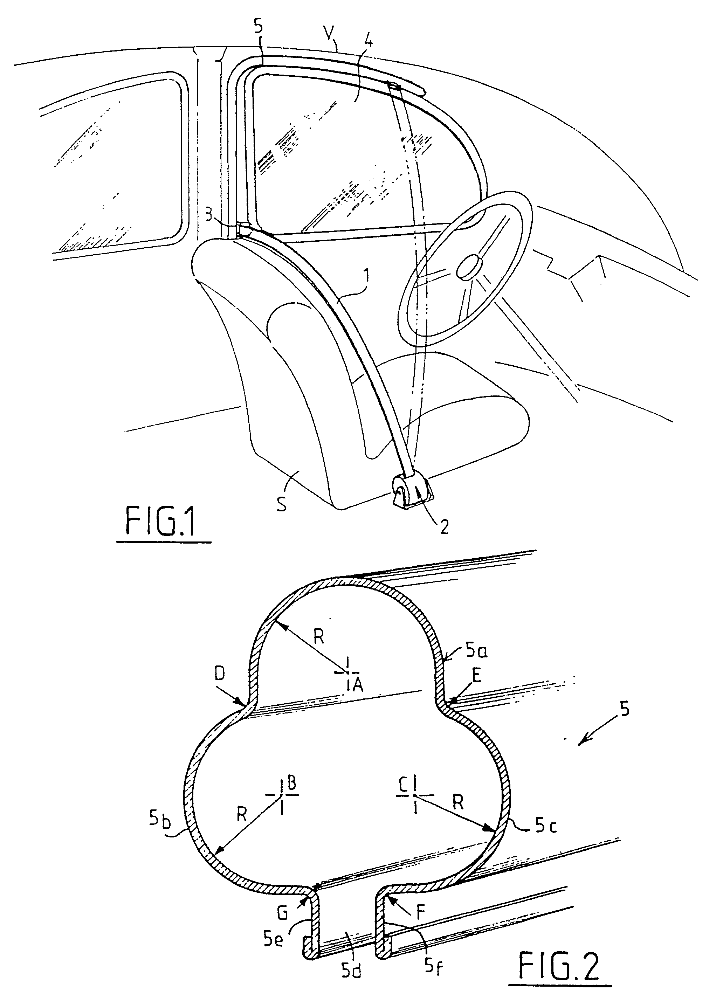

Sur la Fig. 1, on a représenté schématiquement un véhicule V dont le siège du conducteur S est équipé d'un dispositif de ceinture de sécurité passive.

La ceinture de sécurité comprend une sangle 1 formant baudrier dont une extrémité est enroulée sur un enrouleur 2 disposé du côté intérieur du siège S. A son extrémité opposée à l'enrouleur 2, la sangle 1 porte une boucle 3 qui coopère avec un pêne solidaire d'un organe coulissant (non représentés) se déplaçant autour d'une porte 4 dans un rail creux 5 de guidage et de retenue dont une partie est disposée contre le montant vertical de la caisse du véhicule V et dont une autre partie est appuyée contre le bord extérieur du pavillon au-dessus de l'embrasure de la porte 4.

Il est connu que le rail de guidage 5 ne joue aucun rôle d'encaissement des efforts engendrés par exemple lors d'un accident. Le rôle de ce rail de guidage 5 se limite à un guidage et à une retenue de l'organe coulissant disposé à l'intérieur dudit rail.

Cependant, le rail de guidage doit être conçu de façon à assurer la tenue aux efforts faibles qui sont engendrés par exemple lors du déplacement de la sangle.

Ainsi qu'on peut le voir sur la Fig. 2, le rail de guidage 5 se présente, sous la forme de trois parties à peu près semi-cylindriques 5a, 5b, 5c de centres A, B et C respectivement et de rayons intérieurs R.

Une fente longitudinale 5d délimitée par des rebords 5e et 5f faisant saillie vers l'extérieur est ménagée au niveau de la jonction des parties semi-cylindriques 5*b* et 5*c*. Cette configuration présente des parties de raccordement D, E, F et G au niveau des jonctions des parties semi-cylindriques entre elles et au niveau des jonctions des parties semi-cylindriques 5*b* et 5*c* avec les rebords 5*e* et 5*f* délimitant la fente longitudinale 5*d*.

En section, le rail de guidage est donc constitué par des lobes à peu près semi-circulaires.

Pour des questions d'aptitude à la fabrication par profilage à froid, ce rail est constitué d'acier ou de matériau ferreux, par exemple d'inox, d'épaisseur 0,5 mm.

Des calculs de moment d'inertie donnant l'aptitude au profilage d'une part et la rigidité voulue d'autre part, tout en permettant le cintrage du rail de guidage avec un rayon faible, par exemple au niveau du coin de la portière, conduisent, pour l'épaisseur choisie, à adopter cette section dite "en trèfle".

Des calculs ont également permis de déterminer des valeurs particulièrement avantageuses de la distance séparant les centres des trois parties semi-cylindriques constituant le "trèfle".

Ainsi, la distance entre les points A et B et la distance entre les points A et C sont avantageusement égales à 1,6 fois le rayon R (1,6.R). La distance entre les points B et C, c'est à dire les plus proches de la fente 5*d* ménagée entre les deux parties semi-cylindriques 5*b* et 5*c*, est avantageusement égale à 1,5 fois le rayon (1,5.R).

Les parties rectilignes de raccordement au niveau des jonctions des parties semi-cylindriques 5*a*, 5*b*, 5*c* entre elles et avec la fente longitudinale 5*d*, c'est à dire en D, E, F et G, ont une longueur au moins égale au rayon R divisé par quatre (R/4).

Ce rail de guidage doit donc assurer la fonction de guidage d'un organe coulissant, avoir une rigidité suffisante pour supporter les efforts engendrés par le déplacement de la sangle et un poids minimum pour répondre à des critères communs dans l'industrie automobile.

Le rail de guidage est fixé sur la carrosserie du véhicule par tout moyen approprié, par exemple, au moyen d'équerres rapportées et soudées sur la caisse du véhicule.

Comme on le verra par la suite, le guidage de l'organe coulissant est assuré par les parties semi-cylindriques 5*b* et 5*c*, tandis que la partie semi-cylindrique 5*a* assure un appui pour l'organe coulissant proprement dit, qui présente une forme correspondante.

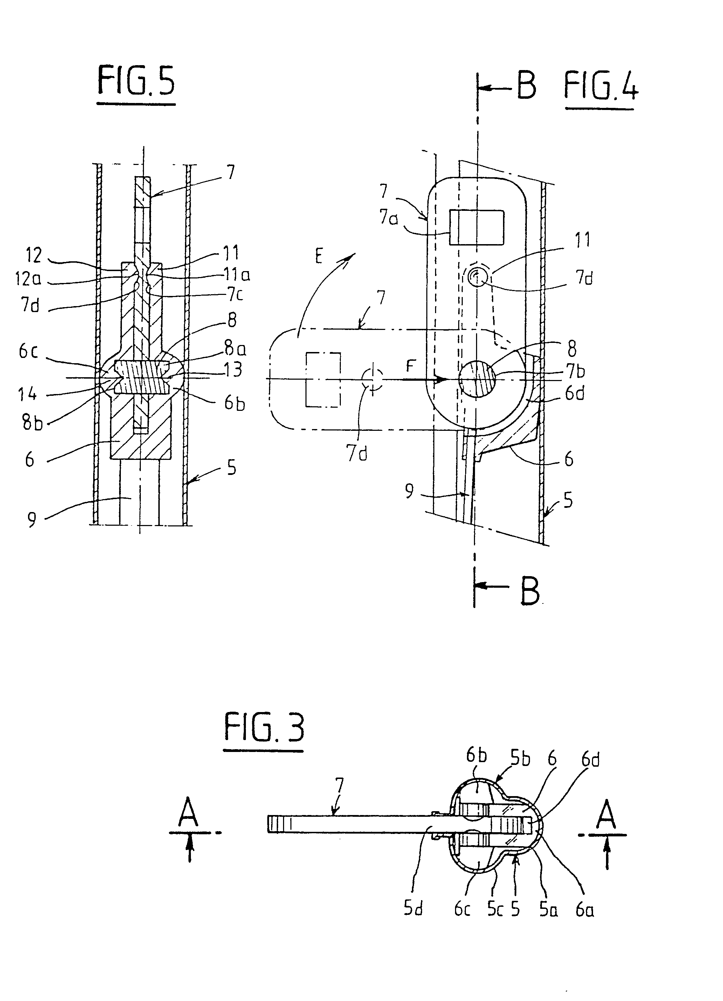

Comme il est représenté sur la Fig. 3, un organe coulissant 6 est disposé à l'intérieur du rail de guidage 5. Cet organe coulissant 6 présente une surface extérieure correspondant à une configuration en "trèfle".

Comme on le verra par la suite, l'organe coulissant 6 présente deux parties semi-sphériques 6*b* et 6*c* disposées de part et d'autre d'un évidement central 6*d* dans lequel est logé un pène 7 faisant saillie hors du rail de guidage 5 à travers la fente 5*d*. L'élément coulissant 6 présente également une surface arrière 6*a* dont la forme sera définie par la suite venant coopérer avec la partie semi-cylindrique 5*a* du rail de guidage 5.

Ainsi qu'on peut le constater, cet organe coulissant présente une surface extérieure venant coopérer avec la surface intérieure correspondante du rail de guidage. C'est aini que les parties semi-sphériques 6*b* et 6*c* de l'organe coulissant viennent s'ajuster dans les parties semi-cylindriques 5*b* et 5*c* du rail de guidage.

Un certain jeu fonctionnel subsiste entre les parties correspondantes, de sorte que le coulissement de l'organe coulissant dans le rail de guidage est facilité.

Si l'on se reporte maintenant à la Fig. 4 qui est une vue en coupe suivant la ligne A - A de la Fig. 3, et dans laquelle le pène 7 est représenté en position escamotée à l'intérieur du rail de guidage 5, on constate que le pène 7 est monté à rotation autour d'un axe 8 solidaire de l'organe coulissant 6. Le pène 7 peut donc osciller sur l'organe coulissant 6 entre une position active dans laquelle il fait saillie hors du rail de guidage et une position escamotée à l'intérieur du rail de guidage. Le pène 7 se présente sous la forme d'une plaque comportant à une extrémité, un évidement 7*a* venant coopérer avec une partie correspondante d'une boucle de ceinture de sécurité (non représentée) et à l'autre extrémité un trou 7*b* dans lequel est logé l'axe 8.

L'extrémité de ce pène 7 venant se loger dans l'évidement central 6*d* de l'organe coulissant 6, est arrondie.

Cet organe coulissant peut être relié à tous moyens actionneurs appropriés. Ainsi par exemple, l'organe coulissant est en matière plastique et il est lié rigidement à l'extrémité d'une courroie 9 reliée à un dispositif d'actionnement, (non représenté) de façon à assurer le déplacement de l'organe coulissant 6 dans le rail de guidage 5.

Cette liaison est assurée par tous moyens connus, mais peut avantageusement être réalisée par surmoulage de l'organe coulissant 6 sur la courroie 9. Les matériaux constituant ces deux éléments doivent donc être compatibles de sorte que le surmoulage produise une liaison durable et efficace.

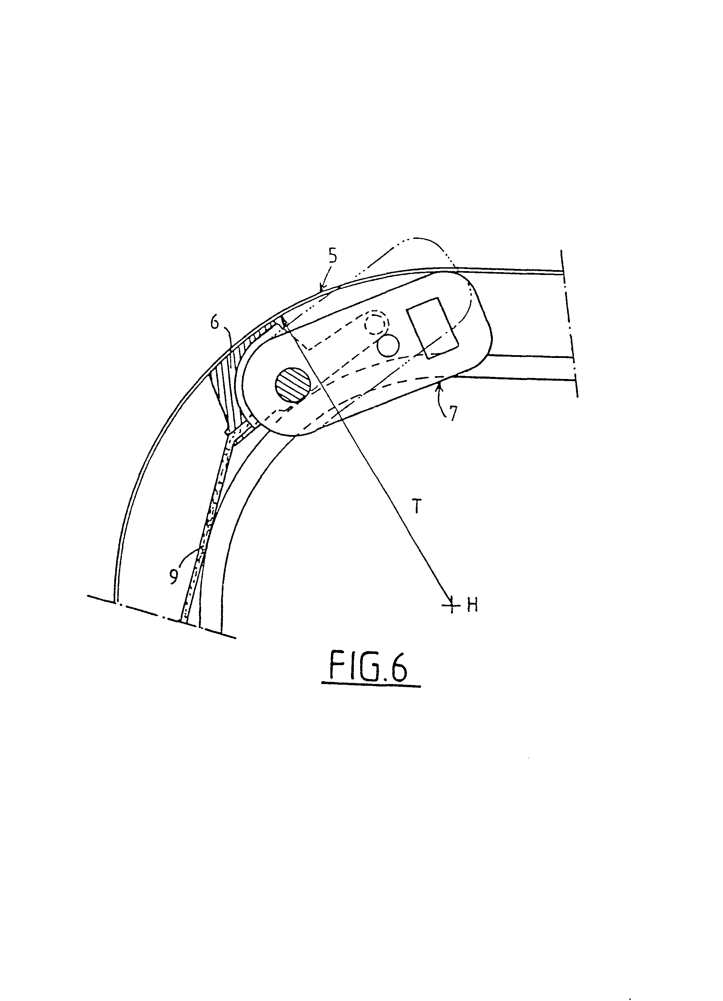

Comme on peut le voir plus clairement sur la Fig. 5, l'organe coulissant 6 comporte deux bras 11 et 12 par exemple venus de matière, s'étendant au-delà de l'axe 8, à partir du corps principal de l'organe coulissant 6. A l'extrémité supérieure de ces deux branches 11 et 12 sont formés des bossages 11*a* et 12*a*, qui peuvent être avantageusement de forme semi-sphérique, venant coopérer avec des évidements de forme correspondante 7*c* et 7*d* ménagés de chaque côté du pène 7.

On retrouve sur cette Fig. 5, les parties semi-sphériques 6*b* et 6*c* de l'organe coulissant 6, qui assurent le guidage de cet organe coulissant dans le rail 5.

L'axe 8 est disposé dans l'organe coulissant au niveau des deux parties semi-sphériques 6*b* et 6*c* et présente à chacune de ses extrémités, des évidements 8a et 8b, qui peuvent avantageusement être coniques. La surface intérieure de l'organe coulissant 6 présente au niveau des parties semi-sphériques précitées, des bossages 13 et 14, qui peuvent avantageusement être de forme conique, venant coopérer avec lesdits évidements 8a, 8b de façon à maintenir l'axe 8 en position et permettre ainsi au pène 7 d'osciller sur l'organe coulissant 6.

Ainsi qu'il ressort de la description qui précède, le pène 7, qui sur la Fig. 4 est représenté en traits mixtes dans sa position active, c'est à dire faisant saillie hors du rail 5, peut être amené suivant le sens indiqué par la flèche E, dans une position escamotée, représentée en trait plein sur cette Fig. 4, dans laquelle le pène est logé entre les bras 11 et 12 de l'organe coulissant 6 et donc à l'intérieur du rail de guidage 5. Les bossages 11a et 12a coopèrent alors avec les évidements 7c et 7d du pène 7 de façon à bloquer ledit pène dans sa position escamotée.

Le pène 7 étant escamoté à l'intérieur du rail 5, il ne peut donc plus gêner l'accès au véhicule.

Il est à noter que la surfasce arrière de l'organe coulissant, c'est à dire la partie 6a de celui-ci venant en contact avec la partie semi-cylindrique 5a du rail de guidage présente une forme particulière.

En effet, cette surface présente:

- un premier centre A, comme on l'a déjà vu, de sorte qu'en section droite du rail de guidage, le rayon de cette partie est tel qu'il existe un jeu fonctionnel de l'ordre de 0.2 mm entre la partie 6a de l'organe coulissant et la partie 5a du rail de guidage;
- un second centre H (Fig. 6) et un rayon inférieur à T de sorte que si T est le rayon minimum de courbure du rail de guidage correspondant par exemple au coude du rail de guidage au-dessus de la portière, le coulissement de l'organe coulissant dans le rail, est toujours possible.

Lors de l'assemblage, l'axe 8 est introduit dans le trou 7b du pène 7, puis on introduit à force cet ensemble dans l'évidement correspondant de l'organe coulissant 6 suivant le sens indiqué par la flèche F sur la Fig. 4.

Lorsque l'on veut déverrouiller le pène 7, de sa position escamotée, on déplace l'organe coulissant jusqu'à une portion courbe du rail de guidage dont le rayon de courbure est suffisant pour que le fond du rail pousse l'extrémité libre du pène 7 opposée à son articulation sur l'organe coulissant de sorte que les évidements 7c, 7d de ce pène se dégagent des bossages 11a, 12a de l'organe coulissant. Ceci provoque donc un déplacement angulaire du pène. Une partie du pène sort alors légèrement du rail de guidage et il est possible de la saisir afin de libérer complètement le pène, ainsi qu'on peut le voir sur la Fig. 6.

La longueur du pène est donc telle qu'elle permet un déplacement angulaire suffisant de ce pène pour qu'on puisse le saisir.

L'assemblage ainsi réalisé doit être suffisant pour assurer la tenue aux efforts engendrés par les déplacements de la sangle, mais ne participe pas à la fonction de sécurité elle-même, comme on l'a déjà mentionné.

En effet, si un effort anormal est exercé par un utilisateur sur la sangle, la position de l'axe 8 par rapport aux parties de raccordement F et G du rail de guidage 5 est telle qu'une génératrice de l'axe 8 vient s'y appuyer moyennant une très faible déformation de l'ensemble.

L'élasticité propre de l'organe coulissant et la coopération des bossages 13 et 14 de cet organe avec les évidements 8a et 8b de l'axe 8, créent une composante qui ramène l'axe 8 en position dès la fin de l'effort anormal.

Il va de soi qu'un dispositif de rappel automatique du pène 7 dans sa position escamotée à l'intérieur du rail de guidage peut être prévu sans sortir du cadre défini par la présente invention.

Ainsi, par exemple, un ressort spiral de rappel (non représenté) peut être prévu sur l'axe 8 de façon que lorsque la boucle 3 est désolidarisée du pène 7, le pène 7 rentre automatiquement à l'intérieur du rail de guidage, dans sa position escamotée.

## Revendications

1. Rail de guidage (5) dans lequel peut se déplacer un organe coulissant (6) solidaire d'un pène (7) faisant saillie à travers une fente (5d) ménagée dans ledit rail et coopérant avec une boucle (3) de ceinture de sécurité passive, notamment pour véhicule automobile, ledit rail (5) étant constitué, au moins dans sa partie de guidage de l'organe coulissant (6), de deux parties latérales de guidage (5b, 5c) en déplacement de l'organe coulissant, disposées de part et d'autre de ladite fente (5d) et d'une partie d'appui (5a) pour l'organe coulissant, disposée en regard de ladite fente, lesdites parties latérales de guidage (5b, 5c) étant constituées, en section, par des lobes à peu près semi-circulaires, disposés de part et d'autre de la fente (5d), caractérisé en ce que la partie d'appui (5a) pour l'organe coulissant est constituée, en section, par un lobe à peu près semi- circulaire, dispose en regard de la fente (5d).

2. Rail de guidage selon la revendication 1, caractérisé en ce que, les lobes ayant un rayon égal à R, les distances entre le centre (A) du lobe définissant la partie d'appui (5a) d'une part et les centres (B, C) des lobes définissant les parties latérales (5b, 5c) d'autre part, sont égales à 1,6 fois le rayon R.

3. Rail de guidage selon la revendication 2, caractérisé en ce que la distance entre les centres (B, C) des lobes définissant les parties latérales est égale à 1,5 fois le rayon R.

4. Rail de guidage selon l'une des revendications 2 ou 3, caractérisé en ce que les parties de raccordement (D, E, F, G) définies aux jonctions des lobes (5a, 5b, 5c) entre eux et aux jonctions des lobes (5b, 5c) avec la fente (5d), ont une longueur égale au rayon divisé par quatre.

5. Dispositif de ceinture de sécurité passive, notamment pour véhicule automobile, comportant un rail de guidage tel que défini dans l'une quelconque des revendications précédentes.

## Patentansprüche

1. Führungsschiene (5), in welcher eine verschiebbare Einrichtung, (6) verschoben werden kann, die mit einem Riegel (7) verbunden ist, welcher durch einen Spalt (5d), der in der Schiene ausgespart ist, herausragt und mit einer Schnalle (3) eines Passiv-Sicherheitsgurtes, insbesondere für Kraftfahrzeuge, zusammenwirkt, wobei die Schiene (5) zumindest in der Führungspartie für die verschiebbare Einrichtung (6) von zwei Seitenpartien (5b, 5c) zur Führung bei der Verschiebung der verschiebbaren Einrichtung, die auf beiden Seiten des Spalts (5d) angeordnet sind, und von einer Auflagepartie (5a) für die verschiebbare Einrichtung, welche gegenüber dem Spalt angeordnet ist, gebildet wird, wobei die Führungs-Seitenpartien (5b, 5c), bezogen auf den Querschnitt, von annähernd halbkreisförmigen Wölbungen gebildet werden, die auf beiden Seiten des Spalts (5d) angeordnet sind, dadurch gekennzeichnet, daß die Auflagepartie (5a) für die verschiebbare Einrichtung, bezogen auf den Querschnitt, von einer annähernd halbkreisförmigen Wölbung gebildet wird, die gegenüber dem Spalt (5d) angeordnet ist.

2. Führungsschiene gemäß Anspruch 1, *dadurch gekennzeichnet*, daß die Wölbungen einen Radius gleich R haben und die Abstände zwischen dem Mittelpunkt A der die Auflagepartie (5a) abgrenzenden Wölbung einerseits und den Mittelpunkten (B, C) der die Seitenpartien (5b, 5c) abgrenzenden Wölbungen andererseits gleich dem 1,6-fachen des Radius R sind.

3. Führungsschiene gemäß Anspruch 2, *dadurch gekennzeichnet*, daß der Abstand zwischen den Mittelpunkten (B, C) der die Seitenpartien abgrenzenden Wölbungen gleich dem 1,5-fachen des Radius R ist.

4. Führungsschiene gemäß einem der Ansprüche 2 oder 3, *dadurch gekennzeichnet*, daß die Verbindungspartien (D, E, F, G), die an den Verbindungsstellen der Wölbungen (5a, 5b, 5c) untereinander und an den Verbindungsstellen der Wölbungen (5b, 5c) mit dem Spalt (5d) abgegrenzt sind, eine Länge gleich dem Radius geteilt durch 4 haben.

5. Passiv-Sicherheitsgurt-Vorrichtung, insbesondere für Kraftfahrzeuge, die eine Führungsschiene umfaßt, wie sie in irgendeinem der vorhergehenden Ansprüche definiert ist.

## Claims

1. A guide rail (5) in which a slider (6) is moveable, the slider being attached to an anchor plate (7) which projects through a slot (5d) formed in the said rail for cooperation with a buckle (3) of a passive safety strap, especially for an automotive vehicle, the said rail (5) comprising, at least in that portion thereof for guiding the slider (6), two lateral guide portions (5b, 5c) for guiding the slider during displacement of the latter, the lateral guide portions being disposed on either side of the said slot (5d), and a thrust portion (5a) for engagement with the slider, disposed opposite the said slot, the said lateral guide portions (5b, 5c) comprising lobes which are substantially semi-circular in cross section and which are disposed on either side of the slot (5d), characterised in that the thrust portion (5a) for the slider comprises a lobe substantially semi-circular in cross-section which is disposed opposite the slot (5d).

2. A guide rail according to Claim 1, characterised in that, if the lobes have a radius equal to R, the distances between the centre (A) of the lobe defining the thrust portion (5a) on the one hand and the centres (B, C) of the lobes defining the lateral guide portions (5b, 5c) on the other hand, are equal to 1.6 times the radius R.

3. A guide rail according to Claim 2, characterised in that the distance between the centres (B, C) of the lobes defining the lateral guide portions is equal to 1.5 times the radius R.

4. A guide rail according to Claim 2 or Claim 3, characterised in that the transition portions (D, E, F, G) defined at the junctions between the lobes (5a, 5b, 5c) with each other and at the junctions between the lobes (5b, 5c) with the slot (5d), have a length which is equal to the radius divided by four.

5. A passive safety strap arrangement, especially for an automotive vehicle, including a guide rail as defined in any one of the preceding Claims.

FIG.1

FIG.2

EP 0 192 560 B1

FIG.5

FIG.4

FIG.3

3

FIG.6